# EUROPEAN PATENT APPLICATION

(11) **EP 0 810 555 A2**
(43) Date of publication of application: **03.12.1997**
(21) Application number: 97303682.5
(22) Date of filing: 02.06.1997
(51) Int. Cl.: G07C 3/00

(54) **The monitoring of a system**

(30) Priority: 31.05.1996 ZA 9604492
(71) Applicant: Eskom, Sandton, Gauteng (ZA)
(72) Inventor: Candy, Richard Brodrick Charles, Hazeldene, Germiston, Gauteng (SA); Blake, Anthony Vincent, Alberton, Gauteng (SA)
(74) Representative: Ablewhite, Alan James

(57) **Abstract**

A method of monitoring equipment includes determining the values of a selected number of parameters of the equipment and deciding, at the location of the equipment, if the values of the selected parameters are abnormal. Data is transmitted to a central control station only if one of the values is abnormal. The invention also extends to an apparatus for monitoring a system.

## Description

**THIS INVENTION** relates to the monitoring of equipment. More particularly, it relates to a method of monitoring equipment and to an apparatus for monitoring equipment.

In supervisory control and data acquisition systems it is necessary to have remote terminal units which are connected to equipment and which monitor the operation thereof. These remote terminal units monitor specific parameters of the equipment and forward the amplitude, condition or state thereof to a central control. The data received at the central control station is then processed. In particular, the data is processed to determine if the amplitude of the parameter is within a normal or abnormal range or if the condition or state of the parameter is normal or abnormal. If the amplitude, condition or state is abnormal an alarm signal is generated.

In this specification, the amplitude, condition or state of a parameter will be referred to as the "value" of the parameter.

According to the invention there is provided a method of monitoring equipment which includes
determining the values of a selected number of parameters of the equipment;
deciding, at the location of the equipment, if the values of the selected parameters are abnormal; and
transmitting data to a central control station only if one of the values is abnormal.

The method may also include grouping the values in a plurality of different categories and evaluating the number of parameters in each category which have abnormal values and transmitting this number to the central control station.

The method may further include recording the value of each parameter at preselected intervals and the time at which the value was determined. An instruction may be transmitted from the central control station to a selected location at which the equipment is located, and data may only be transmitted to the central control station on receipt of the instruction.

Further according to the invention there is provided an apparatus for monitoring equipment which includes
a value determining means for determining the values of a number of selected parameters of the equipment;
an abnormality deciding means, located at the equipment, for deciding if the values of the selected parameters are abnormal; and
a transmitting means for transmitting data to a central control station only if one of the values is abnormal.

The data may include the identity of each of the parameters of which the value is abnormal. The data may also include the value which is abnormal.

The apparatus may include a grouping means for grouping the values in a plurality of different categories and a number evaluating means for evaluating the number of parameters in each category which have abnormal values.

The data transmitted to the central control station may also include the number of parameters in each category which have abnormal values.

The apparatus may have a recording means for recording, at preselected time intervals, the value of each parameter and the time at which it was determined. The apparatus may further have an instructing signal receiving means for detecting an instructing signal from the central control station and a response means for transmitting the data to the central control station on receipt of the instructing signal.

The apparatus may have a central processing unit (CPU) and may thus be "intelligent" so that it may perform a variety of preselected functions relating to the system. For example, the apparatus may be programmed to perform functions, such as calculating potential future values of a parameter using a suitable model, determining the cause of specific abnormal values of a parameter, fault diagnosis, detecting if expected events have taken place or not and generating maintenance related messages to maintenance staff.

The equipment may form part of a system, such as an electric utility.

The invention is now described, by way of an example, with reference to the accompanying drawings in which:-
Figure 1 shows schematically equipment and an apparatus for monitoring it, in accordance with the invention; and
Figure 2 shows schematically the two modes in which the apparatus operates.

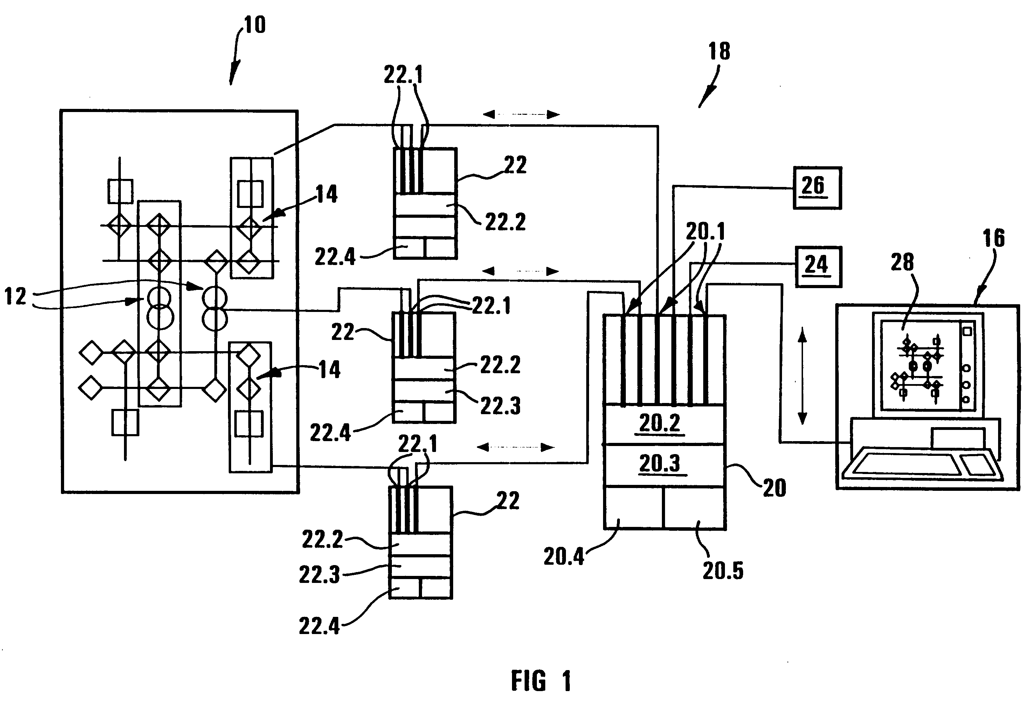

Referring to Figure 1, equipment in the form of a substation that is part of an electric utility is designated generally by reference numeral 10. Those familiar therewith will appreciate that the substation has components such as transformers 12 and breakers and isolators 14. It will also be appreciated that various parameters of such equipment need to be monitored and the amplitude, state or condition thereof relayed to a central control station 16. These parameters are, for example, the status of breakers, transformer tap positions, the temperature of transformer windings, spring rewind mechanisms, the voltage at various points, poles of a breaker, protection components, earthing of components, jitter, charging of breakers and the source of breaker control.

An apparatus for monitoring the equipment 10 is designated generally by reference numeral 18. The apparatus 18 has a stand alone data capture unit 20 which has inlet/outlet ports 20.1, a CPU 20.2, RAM 20.3, an internal power supply 20.4 and a hard disk memory 20.5. The apparatus 18 also has a number of front end bay processors 22 which are connected to the data capture unit 20 and the components of the equipment 10. Each bay processor 22 has input/output ports 22.1, a CPU 22.2, RAM 22.3 and an internal power supply 22.4.

The bay processors 22 and the data capture unit 20 are located at the equipment 10.

The bay processors 22 determine the values of the various parameters of the equipment 10 and record the value of the parameters and the time at which the value is determined, for a particular time interval. It will be appreciated that the bay processors 22 have internal real time clocks. Each bay processor 22 may determine the value of only one parameter, or the values of a number of parameters of a particular component.

The bay processors 22 are interrogated at regular intervals by the data capture unit 20 and the identity of each parameter, its value and the time of determination are transferred to the data capture unit 20 and stored, by means of the disk memory 20.5, as a database. The information stored in the database is processed and the value of each parameter is compared with recorded desired values to determine if the value is normal or abnormal.

The data capture unit 20 is connected to the central control station 16, which may be a national control centre. The data capture unit 20 may also be connected to other control stations, such as a regional control station 24 or a local control station 26.

The data capture unit 20 is polled by a computer 28 at the central control station 16 at regular intervals. The data capture unit 20 then transmits data to the computer 28 about the parameters that are abnormal. This may be done by transmitting to the computer 28 the identity of each parameter that is abnormal at that time or the identity of each abnormal parameter and its value. The time in question could also be transmitted to the computer 28 or the time could be provided by a real time clock of the computer 28.

Instead, the parameters could be grouped in different categories, and only the number of abnormal parameters in each category could be transmitted to the computer 28.

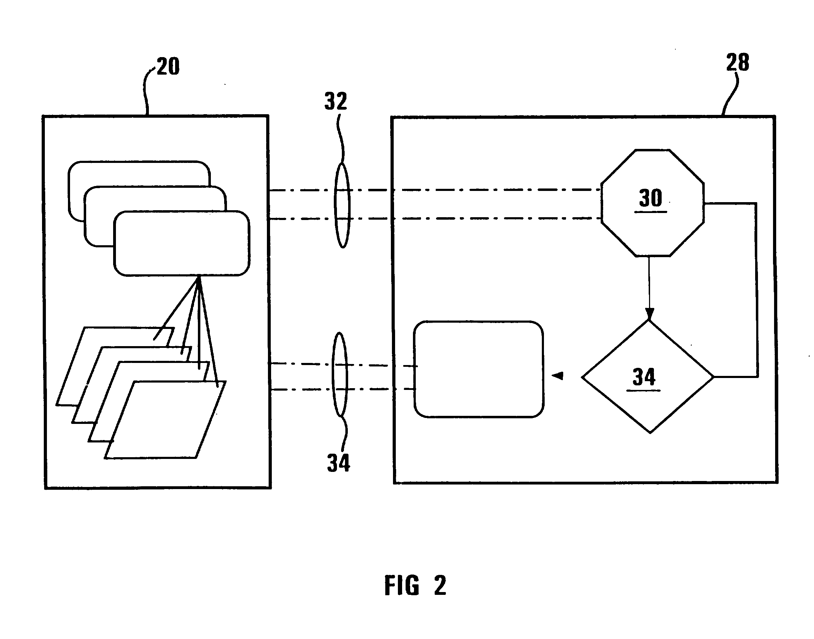

Still further, a variation of the two could be utilised. Thus, as illustrated in Figure 2, in a first step which is indicated by reference number 30, the computer 28 could interrogate the data capture unit 20, as indicated by reference number 32 to obtain the number of abnormal parameters in each category, and the categories that have abnormal values and the number thereof in each category are stored. The number of abnormal values in each category at that time is compared with the number at a preceding time, as indicated by reference number 34, and if there is a change in any one of the categories, then the procedure returns to the first step 30 and the data capture unit 20 is again interrogated as indicated at 32. If there is no change in the number of abnormal parameters in all the categories, which indicates that the equipment 10 is quiescent, then the data capture unit 20 is requested to provide the values of all the parameters of the equipment 10, as indicated at 34, and these values and the appropriate time are stored in a database maintained by the computer 28.

It will be appreciated that there are a number of variations which could be implemented. Thus, for example, the number of abnormal values in each category could be compared, and if there has been no change in the number for any category, then the values of the parameters in that category are requested and stored. Also, the values of all the parameters in all categories could be provided on request by staff of the control station.

With the example described above, the parameters may be grouped in the following groups:-
health, main protection, backup protection and information.

With the invention as described, it is possible to access a far larger number of parameters; millisecond resolution sequence of event logging may be provided; software functions may be performed on multiple inputs; communication with multiple data capture units and bay processors is facilitated; data may be pre-processed prior to sending thereof to a central control station; and data overloading of control staff is minimised, thereby improving their ability to react to crises.

## Claims

1. A method of monitoring equipment which includes
determining the values of a selected number of parameters of the equipment;
deciding, at the location of the equipment, if the values of the selected parameters are abnormal; and
transmitting data to a central control station only if one of the values is abnormal.

2. The method as claimed in Claim 1 which includes grouping the values in a plurality of different categories.

3. The method as claimed in Claim 2 which includes evaluating the number of parameters in each category which have abnormal values and transmitting this number to the central control station.

4. The method as claimed in any one of the preceding claims, which includes recording the value of each parameter at preselected intervals and the time at which the value was determined.

5. The method as claimed in any one of the preceding claims which includes transmitting an instruction from the central control station to a selected location at which the equipment is located, and only transmitting data to the central control station on receipt of the instruction.

6. An apparatus for monitoring equipment which includes
a value determining means for determining the values of a number of selected parameters of the equipment;
an abnormality deciding means, located at the equipment, for deciding if the values of the selected parameters are abnormal; and
a transmitting means for transmitting data to a central control station only if one of the values is abnormal.

7. The apparatus as claimed in Claim 6, wherein the data includes the identity of each of the parameters of which the value is abnormal.

8. The apparatus as claimed in Claim 7, wherein the data also includes the value which is abnormal.

9. The apparatus as claimed in any one of Claims 6 to 8 inclusive, which includes a grouping means for grouping the values in a plurality of different categories.

10. The apparatus as claimed in Claim 9 which also includes a number evaluating means for evaluating the number of parameters in each category which have abnormal values.

11. The apparatus as claimed in Claim 10, wherein the data transmitted to the central control station includes the number of parameters in each category which have abnormal values.

12. The apparatus as claimed in any one of Claims 6 to 11 inclusive, which includes a recording means for recording, at preselected time intervals, the value of each parameter and the time at which it was determined.

13. The apparatus as claimed in any one of Claims 6 to 12 inclusive, which includes an instructing signal receiving means for detecting an instructing signal from the central control station and a response means for transmitting the data to the central control station on receipt of the instructing signal.

14. The apparatus as claimed in any one of Claims 6 to 13 inclusive, which includes a central processing unit for performing a variety of preselected functions relating to the system.

15. The apparatus as claimed in any one of Claims 6 to 14 inclusive, wherein the equipment forms part of an electric utility.
